**Europäisches Patentamt**

**European Patent Office**

**Office européen des brevets**

(19)

(11) Numéro de publication : **0 128 977**
**B1**

(12) **FASCICULE DE BREVET EUROPÉEN**

(45) Date de publication du fascicule du brevet :
03.12.86

(21) Numéro de dépôt : 83200893.2

(22) Date de dépôt : 17.06.83

(51) Int. Cl.⁴ : **G 21 C 19/06, F 16 F 7/12**

(54) **Amortisseur pour râtelier de stockage d'éléments combustibles.**

(43) Date de publication de la demande :
27.12.84 Bulletin 84/52

(45) Mention de la délivrance du brevet :
03.12.86 Bulletin 86/49

(84) Etats contractants désignés :
AT BE CH DE FR GB IT LI LU NL SE

(56) Documents cités :
EP-A- 0 028 010
DE-A- 1 564 640
DE-A- 2 840 559
FR-A- 1 296 086
FR-A- 1 506 453

(73) Titulaire : **ATELIERS DE CONSTRUCTIONS ELECTRI-
QUES DE CHARLEROI (ACEC) Société Anonyme
Avenue Lloyd George 7
B-1050 Bruxelles (BE)**

(72) Inventeur : **Fabris, Mirko
5- Rue de L'Argayon
F-1400 Nivelles (FR)**

Jouve, 18, rue St-Denis, 75001 Paris, France

EP 0 128 977 B1

## Description

Dans les centrales nucléaires, les éléments combustibles sont entreposés dans des rateliers de stockage immergés à grande profondeur dans des piscines spécialement aménagées. Un outillage de préhension qui agrippe l'élément combustible par la tête est utlisé dans les diverses manipulations, cet outillage sert notamment à déposer les éléments combustibles dans des gaines individuelles régulièrement réparties dans les rateliers de stockage.

Au cours de ces manœuvres, il peut arriver que le système d'accrochage de l'outillage de préhension laisse échapper l'élément combustible avant de l'avoir déposé dans le fond de sa gaine. Sous la violence du choc le fond de la gaine ne résiste pas à l'impact de l'élément combustible qui va s'abîmer dans le fond de la piscine en contaminant celle-ci.

La présente invention remédie à ces inconvénients en doublant la gaine dans laquelle on dépose l'élément combustible, d'un dispositif amortisseur de très faible encombrement. Ce dispositif se montre efficace en réduisant les forces correspondant à l'impact à des accélérations ne dépassant pas 10 g.

Ce dispositif amortisseur est constitué d'une couronne indéformable maintenue sous le fond de la gaine par un certain nombre de bretelles régulièrement réparties à la périphérie de la gaine et rattachées au ratelier de stockage par l'intermédiaire d'une bride, coaxiale à la gaine, située dans la partie supérieure de la gaine.

Ces bretelles ont une section soigneusement calibrée sur la majeure partie de leur longueur de manière à s'allonger fortement pour ralentir progressivement la chute de l'élément combustible.

L'invention est exposée en détail, à l'aide des figures suivantes.

La figure 1   est une vue d'ensemble du dispositif d'amortissement.

La figure 2   représente les détails de la partie inférieure de la gaine et une coupe transversale de la couronne indéformable.

La figure 3   montre une coupe transversale de la bride située dans la partie supérieure de la gaine.

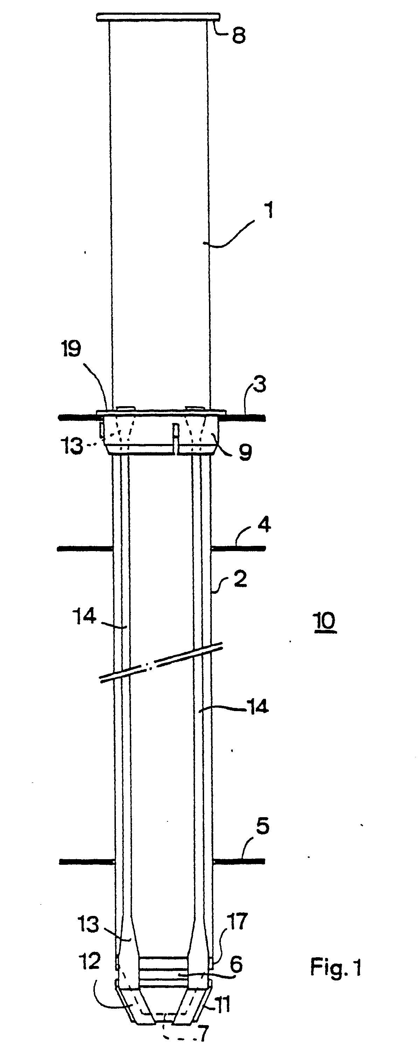

La figure 1   représente un élément combustible 1 glissé dans une gaine individuelle 2 à l'intérieur d'un ratelier de stockage représenté par des entretoises 3, 4 et 5. Cette gaine 2 est nantie d'un fond 6 percé d'un trou 7 de manière à positionner en hauteur l'élément combustible 1 en le soutenant à la base de son diamètre le plus grand. La partie supérieure de la gaine 2 est munie d'une couronne d'agrippage 8 servant aux manipulations. Au niveau de l'entretoise supérieure, repérée 3, une bride 9 coaxiale à la gaine 2 sert de point d'accrochage à des bretelles 10 réparties régulièrement à la périphérie de la bride 9 pour soutenir le fond 6 de la gaine 2 par l'intermédiaire d'une couronne indéformable 11 située juste au-dessous du fond 6 de la gaine 2.

Dans l'exemple de réalisation présenté chaque bretelle 10, en acier inoxydable, est d'une épaisseur constante sur toute sa longueur et présente sur la majeure partie de celle-ci une largeur rigoureusement calibrée se raccordant aux deux extrémités 12 de la bretelle 10 par un évasement progressif 13. La largeur rigoureusement calibrée de chaque bretelle 10 définit une zone déformable 14 qui grâce à sa grande longueur servira d'amortisseur en cas de chute de l'élément combustible 1.

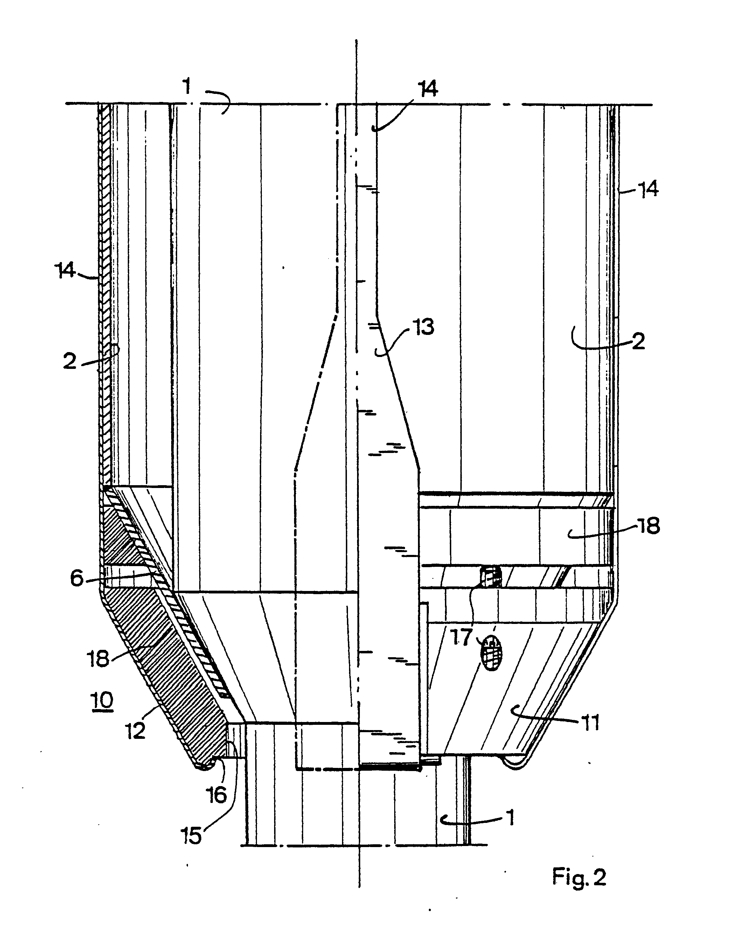

La figure 2   montre des détails de la partie inférieure de la gaine 2.

La couronne indéformable 11, ayant en son centre une ouverture 15 d'un diamètre à peu près égal à celui du trou 7 du fond 6 de la gaine 2 et située juste au-dessous du fond 6 de la gaine 2 pour servir en quelque sorte de doublure au fond 6 de la gaine 2. Chaque extrémité 12 de la bretelle 10 épouse le profil extérieur de la couronne indéformable 11, conformée elle-même pour ne pas introduire de fissurations aux extrémités 12 des bretelles 10, et est solidarisée à la couronne indéformable 11, dans l'exemple de réalisation repris à la figure 2, au moyen d'un cordon de soudure 16. La mise en place correcte de la couronne indéformable 11 se fait à l'aide de vis de réglage 17 disposées régulièrement en périphérie de la couronne indéformable 11 et collaborant avec un anneau 18 solidarisé au fond 6 de la gaine 2. En utilisant ces vis de réglage 17 on répartit équitablement la tension sur chacune des bretelles 10 et on rend la couronne indéformable 11 coaxiale au fond 6 de la gaine 2.

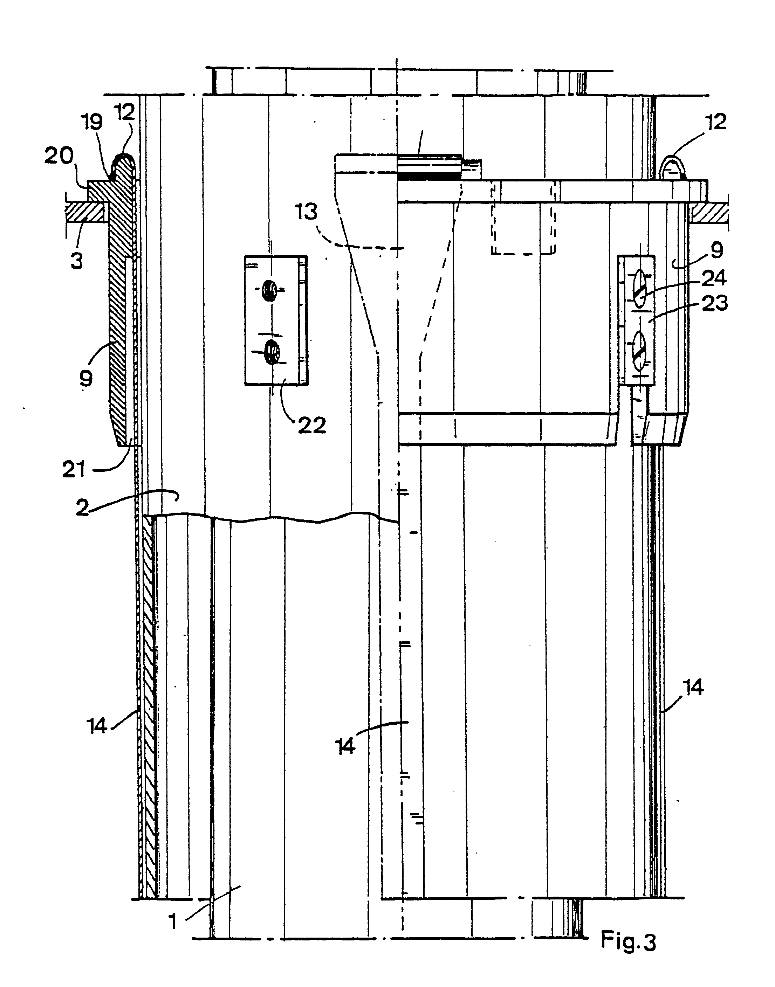

La figure 3   montre une coupe détaillée de la bride 9 à laquelle se raccordent les bretelles 10 par leurs extrémités 12 conformées pour éviter des fissurations. Dans cet exemple de réalisation, ces extrémités 12 sont solidarisées à la bride 9 par un cordon de soudure 19. La bride 9 prend appui sur l'entretoise 3 du ratelier de stockage à l'aide d'une colerette 20 solidaire de la bride 9. Un évidement circulaire 21 débouchant à la partie inférieure de la bride 9 permet de fixer des pièces de renforcement 22 à certains endroits de la périphérie de la gaine 2 pour déterminer avec précision la position de la gaine 2 par rapport à la bride 9. De plus certaines de ces pièces de renforcement 22 servent à la fixation d'une butée 23 sur la gaine 2 à l'aide de vis 24. Cette ou ces butées 23 permettent de dégager l'élément combustible 1 de sa gaine 2 lorsqu'à la suite d'un incident de manipulation, il y a eu enfoncement du fond 6 de la gaine 2 entraînant un coincement dans la gaine 2 de l'élément combustible 1 au niveau de son diamètre le plus gros. Dans ce cas, en reprenant l'élément combustible 1 avec l'outillage de préhension, on risquerait de remonter à la fois l'élément combustible 1 et la gaine 2 sans pouvoir les dissocier l'une de l'autre. La butée 22 arrête la gaine 2 en prenant appui sur l'entretoise 3 et permet le dégagement de l'élément combustible 1.

Dans cette disposition, la gaine 2 contenant l'élément combustible 1 est suspendue à l'entretoise 3 par l'intermédiaire du dispositif amortisseur qui reçoit la charge sur la couronne indéformable 11, la transmet aux bretelles 10 puis à la collerette 20 de la bride 9.

En cas de percussion violente de l'élément combustible 1 dans la gaine 2, les bretelles 10 s'allongent pour ralentir progressivement l'élément combustible 1 et sa gaine 2. Il peut arriver, pour des chocs particulièrement violents, que l'allongement des bretelles 10 soit tel que la couronne d'agrippage 8 vienne buter sur l'entretoise 3 du ratelier de stockage et que la course supplémentaire de l'élément combustible 1 déforme alors le fond 6 de la gaine 2 tout en continuant à allonger les bretelles 10. Dans ce cas extrême intervient alors la butée 23 pour permettre de dissocier la gaine 2 de l'élément combustible 1 à la remontée de celui-ci.

**Revendications**

1. Dispositif amortisseur d'un élément combustible nucléaire (1) déposé dans une gaine (2), munie d'un fond (6) ayant en son centre un trou (7) d'un diamètre un peu supérieur à celui de la partie inférieure de l'élément combustible (1), à l'intérieur d'un ratelier de stockage, caractérisé en ce qu'il comprend une couronne indéformable (11) réunie à une bride (9), prenant appui sur une entretoise (3) du ratelier de stockage, à l'aide d'un certain nombre d'éléments (10) déformables élastiquement et/ou plastiquement, en ce que la couronne indéformable (11) co-axiale à la gaine (2), est nantie d'une ouverture centrale (15) d'un diamètre sensiblement égal à celui du trou (7) du fond (6) de la gaine (2) et sert de support au fond (6) de la gaine (2).

2. Dispositif amortisseur selon la revendication 1, caractérisé en ce que les éléments déformables plastiquement sont des bretelles (10) en acier inoxydable dont la majeure partie de la longueur, appelée zone déformable (14), a une section calibrée avec une bonne précision.

3. Dispositif amortisseur selon une des revendications précédentes caractérisée en ce que pour chaque bretelle (10) la zone déformable (14) est raccordée à chaque extrémité (12) par un évasement progressif (13).

4. Dispositif amortisseur selon une des revendications précédentes, caractérisé en ce que les extrémités (12) de chaque bretelle (10) sont conformées d'une part à la couronne indéformable (11) et d'autre part à la bride (9) selon un profil dont les arrondis ont des rayons de courbure suffisants pour éviter des amorces de rupture dans les extrémités (12).

5. Dispositif amortisseur selon une des revendications précédentes caractérisé en ce que la couronne indéformable (11) est nantie de vis de réglage (17), réparties régulièrement à la périphérie de la couronne indéformable (11), qui servent de support à un anneau (18) solidarisé au fond (6) de la gaine (2).

**Claims**

1. Shock absorber device for a nuclear fuel element (1) deposited in a sheath (2) provided with a bottom portion (6) comprising centrally a hole (7) of a diameter slightly larger than that of the lower portion of the fuel element (1), within a storage rack, characterised in that it comprises a non-deformable annulus (11) connected to a collar (9) bearing on a transverse member (3) of the storage rack, by means of a plurality of elastically and/or plastically deformable elements (10), and in that the non-deformable annulus (11), coaxial with the sheath (2), is provided with a central aperture (15) having a diameter substantially equal to that of the hole (7) in the bottom portion (6) of the sheath (2) and serves as a support for the bottom portion (6) of the sheath (2).

2. Shock absorber device according to claim 1, characterised in that the plastically deformable elements are stainless steel straps (10) the major part of the length of which, designated the deformable zone (14), has a cross-section calibrated with great precision.

3. Shock absorber device according to one of the preceding claims, characterised in that at each strap (10) the deformable zone (14) is connected to each end (12) by a gradually flared portion (13).

4. Shock absorber device according to one of the preceding claims, characterised in that the ends (12) of each strap (10) are shaped to conform on the one hand to the non-deformable annulus (11) and on the other hand to the collar (9) in a form whose curves have radii of curvature sufficient to obviate incipient fractures in the ends (12).

5. Shock absorber according to one of the preceding claims, characterised in that the non-deformable annulus (11) is provided with regulating screws (17) distributed uniformly at the periphery of the non-deformable annulus (11) and serving as supporting means for a ring (18) which is made integral with the bottom portion (6) of the sheath (2).

**Patentansprüche**

1. Stoßdämpfervorrichtung eines nuklearen Brennelements (1), das in eine Hülle (2) eingesetzt ist, die mit einem Boden (6) versehen ist, der in seiner Mitte eine Bohrung (7) aufweist, deren Durchmesser ein wenig größer als der Durchmesser des unteren Teils des Brennelements (1) ist, in Inneren eines Lagergestells, dadurch gekennzeichnet, daß sie einen unverformbaren Kranz (11) aufweist, der über eine gewisse Anzahl von elastisch und/oder plastisch verformbaren Elementen (10) mit einem Flansch (9) verbunden ist, der auf einem Haltering (3) des Lagergestells aufliegt, und daß der zu der Hülle (2) koaxiale, unverformbare Kranz (11) mit einer zentralen Öffnung (15) mit einem im wesentlichen gleichen Durchmesser wie bei der Bohrung (7) des Bodens (6) der Hülle (2) versehen ist, und als Stütze für den Boden (6) der Hülle (2) dient.

2. Stoßdämpfervorrichtung gemäß Anspruch 1, dadurch gekennzeichnet, daß die plastisch verformbaren Elemente Tragbänder (10) aus nichtrostendem Stahl sind, bei denen der größte Teil der Länge, der verformbare Zone (14) genannt wird, einen genau bemessenen Querschnitt aufweist.

3. Stoßdämpfervorrichtung gemäß einem der vorhergehenden Ansprüche, dadurch gekennzeichnet, daß bei jedem Tragband (10) die verformbare Zone (14) über eine progressive Verbreiterung (13) mit jedem Ende (12) verbunden ist.

4. Stoßdämpfervorrichtung gemäß einem der vorhergehenden Ansprüche, dadurch gekennzeichnet, daß die Enden (12) jedes Tragbandes (10) einerseits an den unverformbaren Kranz (11), und andererseits an den Flansch (9) angepaßt sind, wobei sie ein Profil aufweisen, dessen Krümmungen genügend große Radien haben, um Bruchbildung bei den Enden (12) zu vermeiden.

5. Stoßdämpfervorrichtung gemäß einem der vorhergehenden Ansprüche, dadurch gekennzeichnet, daß der unverformbare Kranz (11) mit gleichmäßig über den Umfang verteilten Einstellschrauben (17) versehen ist, die als Auflage für einen mit dem Boden (6) der Hülle (2) fest verbundenen Ring (18) dienen.

**0 128 977**

Fig. 1

Fig. 2

Fig.3